Europäisches Patentamt

European Patent Office

Office européen des brevets

(11) Numéro de publication: **0 223 680**
**A2**

## (12) DEMANDE DE BREVET EUROPEEN

(21) Numéro de dépôt: 86402412.0

(22) Date de dépôt: 28.10.86

(51) Int. Cl.⁴: **E 04 B 5/58**
**F 16 L 3/12, H 02 G 3/26**

(30) Priorité: 07.11.85 FR 8516487

(43) Date de publication de la demande:
27.05.87 Bulletin 87/22

(84) Etats contractants désignés:
AT BE CH DE ES FR GB LI SE

(71) Demandeur: PLACOPLATRE
20, rue Victorien-Sardou
F-92506 Rueil Malmaison Cedex (FR)

(72) Inventeur: Bugeia, Marc
9, rue de la Rangée
F-92380 - Garches (FR)

Klein, Jean Pierre
48 bis rue Pierre Louvrier
F-92140 - Clamart (FR)

Rivaux, André
41 rue de Bagneux
F-92120 - Montrouge (FR)

Funten, Marc
59 rue Alexandre Ribot
F-77280 - Métry Le Neuf (FR)

Lizee, Emmanuel
49 rue de Belle Chasse
F-75007 - Paris (FR)

(74) Mandataire: CABINET BONNET-THIRION
95 Boulevard Beaumarchais
F-75003 Paris (FR)

(54) Suspente pour faux plafond.

(57) Suspente pour faux-plafond comportant deux éléments 23,24 formant plaque et contreplaque, une rigole 25' étant ménagée dans chacun de ces éléments afin de former un logement pour une tige filetée 30. Une fenêtre 26 est également prévue dans chacun des éléments afin de recevoir un écrou 31.

Les éléments constituant la suspente sont solidarisés par la coopération de fenêtres 29 et de crevés 27.

FIG.2

EP 0 223 680 A2

## Description

La présente invention concerne d'une manière générale la suspension d'un faux plafond à une quelconque structure de support, tel que plancher ou dalle.

Elle vise plus particulièrement un dispositif permettant de suspendre à la structure de support des fourrures constituant l'ossature du faux plafond.

De telles fourrures, en pratique des profilés, sont, d'une manière générale, suspendus à l'aide de suspentes.

Traditionnellement, les suspentes comportent un élément annulaire, qui coopère avec le profilé, et un organe de fixation.

Dans certains cas, l'organe de fixation est prévu réglable, en l'espèce en hauteur.

En pratique, lors de la mise en place d'un tel faux-plafond, on enfile les profilés dans les suspentes. Ensuite on solidarise profilés et suspentes, celles-ci étant disposées à intervalles réguliers, de préférence.

L'ensemble constitué par un profilé et les suspentes correspondantes est ensuite fixé au support, et sa hauteur est réglée par des moyens de réglage prévus dans l'organe de fixation.

De tels moyens de réglage comprennent généralement une tige filetée coopérant avec un écrou permettant le réglage de la hauteur de la suspente, et un contre-écrou permettant de bloquer l'écrou.

Un inconvénient de ce type de suspente est qu'il est nécessaire, afin d'en effectuer le réglage, de fixer et de régler en une seule opération toutes les suspentes avec le profilé. Le maniement en est malaisé et prend du temps.

L'objet de la présente invention est une suspente ne présentant pas cet inconvénient.

Plus précisément, une suspente selon l'invention, du genre comportant une tige filetée solidaire d'un point d'ancrage, un écrou coopérant avec la tige filetée, comportant un organe de soutien vis-à-vis duquel la tige est montée rotative autour de son axe, est caractérisée en ce que l'organe de soutien est constitué de deux éléments formant plaque et contreplaque s'épousant et entre lesquels est ménagé un logement globalement cylindrique dans lequel est prise la tige filetée.

Une suspente selon l'invention comporte de plus une fenêtre apte à recevoir l'écrou empêchant tout déplacement de celui-ci dans le sens axial le long de la tige filetée.

L'écrou coopère ainsi avec la fenêtre et la tige filetée pour permettre le réglage de la hauteur de la suspente.

De préférence, la fenêtre comporte un moyen de blocage de l'écrou.

De préférence, le logement de la tige est constitué de deux rigoles hémicylindriques ménagées dans chacun des éléments formant plaque et contreplaque, interrompues sensiblement à mi-hauteur par la fenêtre recevant l'écrou. Les deux éléments formant plaque et contreplaque sont maintenus accolés par la coopération de crevés et de fenêtres, et peuvent être dégagés l'un de l'autre par un mouvement de translation dans leur plan de contact lorsque la tige n'est pas prise dans son logement.

Ainsi, une suspente selon l'invention est démontable, et permet d'utiliser une tige filetée et un écrou quelconque sans inconvénient.

Selon un premier mode de réalisation de l'invention, l'un au moins des éléments constituant l'organe de soutien présente globalement en coupe longitudinale une forme de L muni à l'extrémité libre de sa plus petite branche d'un rebord apte à coopérer avec une fourrure de faux plafond de manière à empêcher celle-ci, lorsqu'elle repose sur ladite petite branche, de tomber.

Ainsi, il est possible de mettre en place plusieurs suspentes une à une, et d'installer les fourrures correspondantes ultérieurement.

De plus, cette disposition permet de soutenir diverses fourrures, différant par leurs formes et/ou dimensions, avec les mêmes suspentes.

Selon ce premier mode de réalisation de l'invention, des suspentes comportent deux éléments formant plaque et contreplaque présentent tous deux une forme de L en coupe longitudinale, et sont sensiblement symétriques par rapport à un plan par lequel ils sont en contact, l'axe de la tige étant contenu dans ce plan.

De telles suspentes permettent de fixer deux fourrures dos à dos.

Selon une autre variante d'exécution de ce même mode de réalisation, l'un des éléments constitutifs de l'organe de soutien est une simple contreplaque, rectangulaire en plan.

Dans un autre mode de réalisation de l'invention, les deux éléments plaque et contreplaque comportent une partie inférieure formant, lorsque les éléments sont accolés, un étrier apte à saisir latéralement une fourrure de faux plafond du genre munie d'une semelle supérieure sensiblement plane, par les bords de ladite semelle.

Il s'agit, généralement, dans ce cas, de fourrures à section transversale en I, présentant des dimensions relativement importantes ce qui rend avantageuse la mise en oeuvre de suspentes adaptées à les saisir par la semelle supérieure.

Ce type de fourrure peut constituer l'ossature dite primaire de faux-plafond telle que décrite dans la demande de brevet n° 85 03 429 du 8 mars 1985 par la Demanderesse.

Les caractéristiques et avantages de la présente invention ressortiront d'ailleurs de la description qui va suivre, en référence aux dessins annexés, dans lesquels :

la figure 1 est une vue partielle en perspective d'une mise en oeuvre d'un premier mode de réalisation de l'invention ;

la figure 2 est une vue en perspective d'un mode de réalisation de l'invention correspondant à la figure 1 ;

la figure 3 est une vue partielle en perspective d'une suspente assemblée ;

la figure 4 est une vue illustrant une variante d'exécution du mode de réalisation de l'invention représenté à la figure 2 ;

la figure 5 est une vue partielle en perspective d'une mise en oeuvre d'un deuxième mode de réalisation de l'invention ;

la figure 6 est une vue en perspective d'un mode de réalisation de l'invention correspondant à la figure 5.

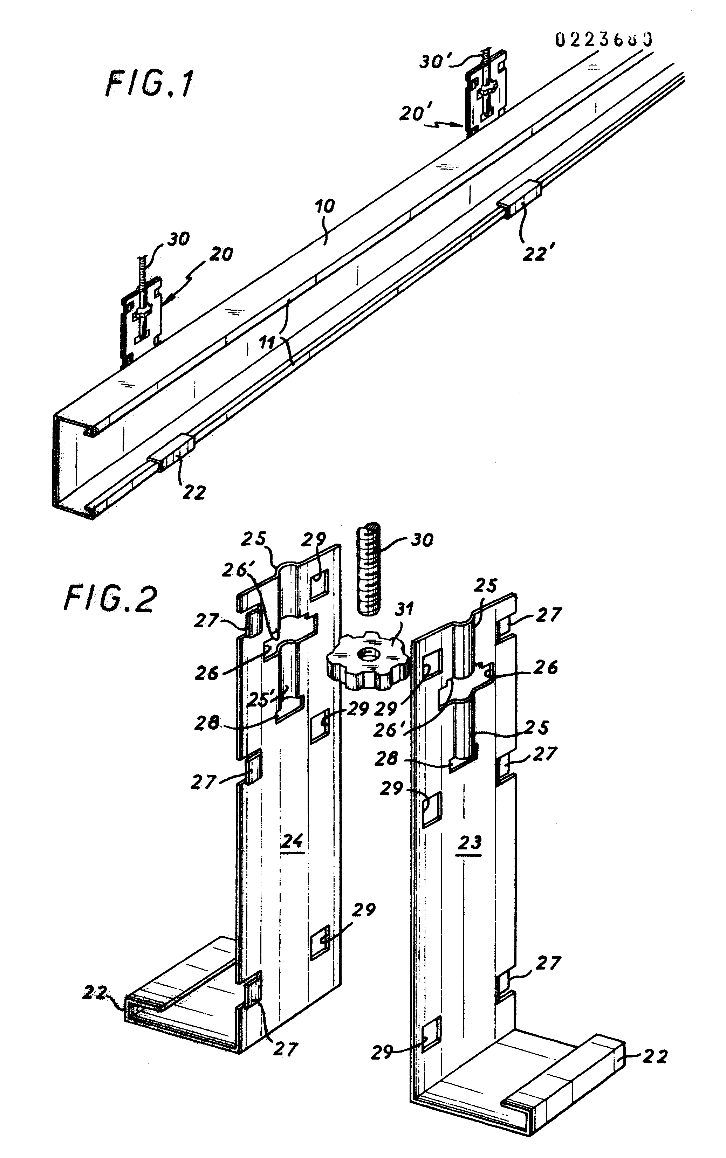

Plus en détail, la figure 1 représente une fourrure de faux-plafond 10, en pratique un profilé en U, chacune des deux branches du U comportant un rebord 11 formé par deux replis successifs à 90° vers l'intérieur. Le profilé 10 est, tel que représenté, suspendu par deux suspentes 20 et 20' selon l'invention.

Les suspentes 20 et 20', selon un premier mode de réalisation de l'invention illustré par la figure 1, coopèrent respectivement avec des tiges filetées 30 et 30', qui sont solidaires d'une structure porteuse telle que plancher, plafond, poutre, ou autre, non représentée.

On remarquera que l'un des rebords 11, en pratique le rebord inférieur de la face du profilé s'appuyant sur les suspentes, coopère par emboîtement avec des rebords correspondants 22 et 22' de ces suspentes, s'étendant également selon deux directions orthogonales en deux replis successifs vers l'intérieur.

La figure 2 représente deux éléments 24 et 23 d'une suspente 20 selon le premier mode de réalisation de l'invention, en perspective, séparés, ainsi qu'une tige filetée 30 et un écrou 31 destinés à fixer la suspente 20, et à régler sa hauteur par rapport à un support fixe non représenté.

Des crevés 27 correspondent avec des fenêtres 29 qui sont ménagés en regard dans l'élément opposé, ces crevés et ces fenêtres correspondantes étant aptes à coopérer lorsque les éléments 23 et 24 sont accolés dos à dos.

Des saillies 25, hémicylindriques, sont ménagées dans chaque élément 23,24, d'orientation longitudinale, leur axe étant sensiblement médian au plan d'accolement de ces éléments. Ces saillies s'étendent à partir du bord supérieur de chaque élément sur une hauteur largement inférieure à celle de l'élément.

Aux saillies 25 correspondent, à l'opposé, des rigoles 25' ménagées dans chacun des éléments 23 et 24 en forme de demi-cylindre, chaque rigole 25' étant obtenue par déformation de la matière constituant chacun des éléments 23 et 24.

Chaque rigole 25', et donc chaque saillie 25, est interrompue, sensiblement à mi-hauteur par une fenêtre 26 rectangulaire qui lui est perpendiculaire.

Chaque fenêtre 26 comporte, découpée dans son bord supérieur, une échancrure 26' apte à coopérer avec un écrou 31 afin de servir de moyen de blocage de celui-ci.

Une fenêtre 28 disposée immédiatement en dessous de la saillie 25 vient terminer celle-ci, avec laquelle elle présente un côté commun, à savoir la bordure inférieure de cette saillie.

La tige filetée 30 est partiellement représentée l'écrou 31, est apte à coopérer avec la tige 30, et présente un diamètre et une hauteur légèrement inférieurs respectivement à la hauteur et à la largeur de la fenêtre 26.

L'écrou 31 comporte une forme crénelée à sa périphérie, les crénaux ainsi formés permettant de faire pénétrer partiellement l'écrou, par un déplacement de celui-ci dans le sens axial par rapport à la tige, dans l'échancrure 26'.

Ainsi, l'écrou 31 est bloqué en rotation lorsqu'il est engagé par ses crénaux dans l'échancrure 26' dont la largeur est inférieure à son diamètre.

L'écrou 31 peut cependant présenter toute autre forme non strictement circulaire en plan, lui permettant d'être bloqué en rotation par l'échancrure 26'.

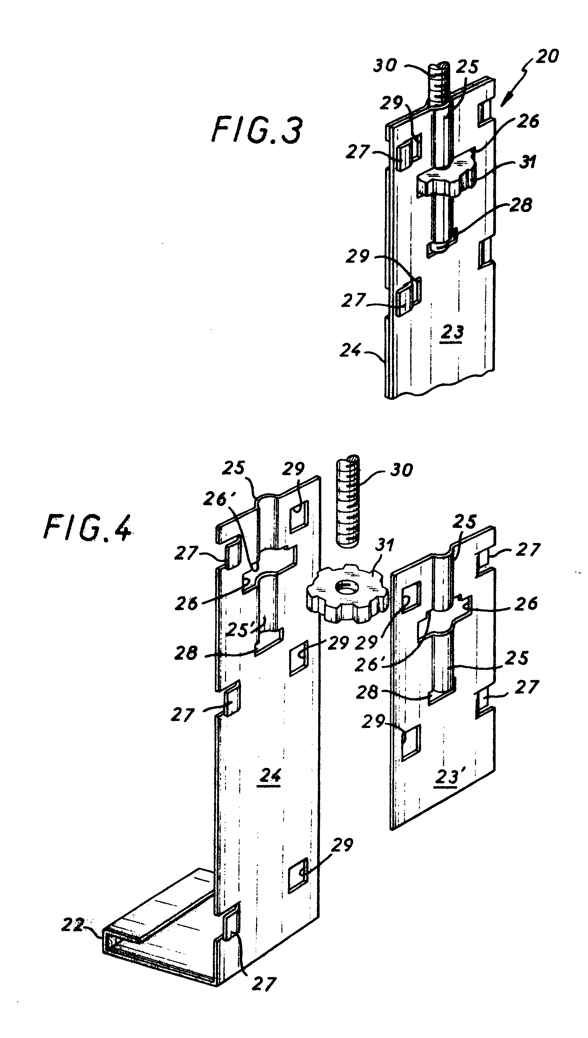

La figure 3 représente partiellement la suspente 20 dans son état monté.

Les crevés 27 en saillie de chacun des éléments 23 et 24 sont insérés dans les fenêtres 29, avec lesquelles ils coopèrent.

Les rigoles 25' constituées par l'envers des saillies 25 respectives de chacun des éléments 23 et 24, associées, forment un logement cylindrique recevant la tige 30.

L'écrou 31 est logé dans les fenêtres 26, et est traversé normalement par la tige filetée 30. L'extrémité inférieure de la tige 30 peut venir vient en butée contre la bordure inférieure de la fenêtre 28.

Dans cette illustration, l'écrou 31 est libre en rotation dans son logement, n'étant pas en position d'engagement des échancrures 26'.

En pratique, les crevés 27 immobilisent, coopérant avec les fenêtres 29 et se rabattant latéralement au-delà de ces fenêtres, les deux éléments 24 et 23 qui forment ainsi plaque et contreplaque.

Il en est de même lorsque l'on associe à l'élément 24 un élément 23', tel que représenté en perspective à la figure 4, formant ainsi une simple contreplaque et ne participant pas à la constitution d'une suspente double.

Il s'agit, en pratique, d'une variante d'exécution de l'invention, constituant une suspente simple.

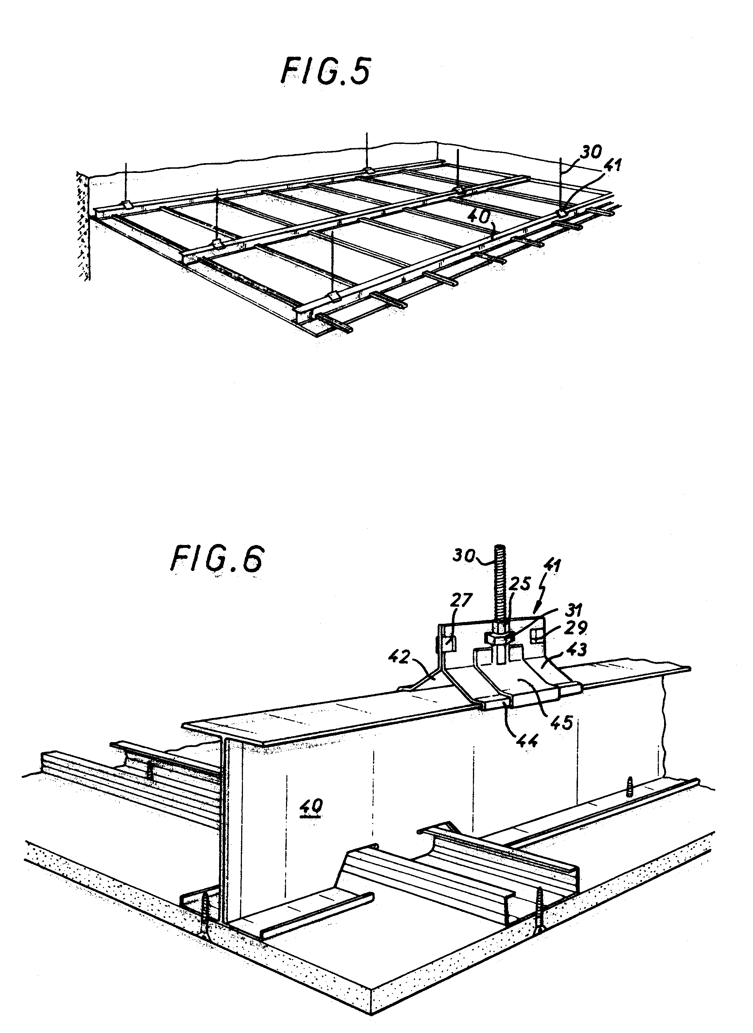

La figure 5 représente une ossature de faux-plafond supportée par des suspentes constituant un deuxième mode de réalisation de l'invention.

Une telle ossature est constituée d'une trame orthogonale constituée de fourrures dites primaires, directement suspendues par des suspentes, et de fourrures dites secondaires, fixées aux fourrures primaires.

Dans ce mode de réalisation, les fourrures primaires sont plus précisément constitués d'une âme centrale bordée de deux semelles, l'une inférieure, et l'autre supérieure, constituées chacune de deux ailes s'étendant orthogonalement par rapport à l'âme centrale.

En pratique, dans une telle ossature de faux-plafond, des fourrures primaires 40 présentent une section transversale globalement en I.

Dans ce cas, les suspentes 41, qui constituent un deuxième mode de réalisation de l'invention, sont adaptées par leur forme à saisir latéralement une partie dite semelle supérieure de la fourrure, en pratique la partie plane horizontale supérieure du I.

Ces suspentes sont reliées par des tiges filetées 31 à une structure porteuse, non représentée, de la même façon que les suspentes selon le premier mode de réalisation de l'invention décrit précédemment.

Plus en détail, la figure 6 représente une suspente 41, selon le deuxième mode de réalisation de l'invention, soutenant une fourrure 40 partiellement représentée.

La suspente 41 est constituée de deux éléments 42 et 43 formant plaque et contreplaque accolées dos à dos sur une portion de leur hauteur.

On retrouve ici pour la solidarisation des éléments 42 et 43, dans chacun de ceux-ci une fenêtre 29 et un crevé 27, comme dans le premier mode de réalisation de l'invention.

De même, une saillie 25 correspondant, sur le dos de chaque portion de chaque contreplaque accolé au dos de l'autre contreplaque, à une rigole 25', est interrompue par une fenêtre transversale 26 comportant une échancrure 26' ménagée dans son bord supérieur. Les deux rigoles 25' accolées dos à dos forment un logement apte à recevoir la tige 30 et les fenêtres 26 logent l'écrou 31 qui coopère avec cette tige.

Dans ce deuxième mode de réalisation de l'invention, la partie inférieure de chaque élément présente une portion en biais, définissant globalement un plan oblique par rapport à un premier plan constitué par la surface d'accolement des parties supérieures des éléments.

L'intersection de ces deux plans est parallèle à la fourrure 40.

Cette partie inférieure de chaque élément se termine par un rebord 44 constitué d'un repli venant épouser l'extrémité latérale de l'aile correspondante de la semelle supérieure de la fourrure 40.

En pratique, le rebord 44 est formé de manière à saisir ce rebord de la fourrure.

A cette fin, ce rebord 44 est plié selon un premier plan parallèle à la semelle supérieure de la fourrure qu'il vient épouser par le dessus, puis selon un second plan, perpendiculaire, puis encore selon un troisième plan parallèle au premier qui vient épouser l'extrémité latérale correspondante de la semelle par le dessous.

Les deux éléments 42 et 43 sont symétriques par rapport à leur plan d'accolement, exception faite des crevés et fenêtres qui ne sont symétriques que par rapport à l'axe du logement de la tige 30, et constituent globalement une suspente comportant un étrier apte à saisir latéralement, de part et d'autre, la semelle supérieure de la fourrure 40. Avantageusement, il est prévu vers la partie inférieure de chaque élément 42,43 un pli de renfort central 45 réalisé, par exemple, par emboutissage avant l'opération de pliage du rebord 44.

L'aspect et la structure d'une suspente selon l'invention ayant été décrits, on va maintenant décrire l'installation des suspentes selon l'invention, et d'un profilé suspendu par lesdites suspentes.

L'installation des suspentes 22, selon le premier mode de réalisation de l'invention, se fait dans un premier temps en disposant les deux parties dorsales des éléments 24 et 23 dos à dos, légèrement décalés latéralement de manière à ce que les crevés 27 puissent pénétrer dans les fenêtres 29 qui leur sont, dans ce cas, exactement en regard.

On notera toutefois que dans cette position, les éléments 23 et 24 ne sont en contact que par une partie de leur face dorsale, étant légèrement décalée latéralement.

On réaligne ensuite les éléments 24 et 23 par un glissement latéral relatif de ceux-ci, de manière à superposer leur face dorsale accolée.

Dans cette position d'alignement, le rebord des crevés 27 recouvre partiellement une partie pleine de la face dorsale de l'élément accolé, partie pleine refermant la fenêtre 29 correspondante. Accolées dos à dos, les rigoles 25' correspondant aux saillies 25 forment, comme mentionné précédemment, un logement apte à recevoir la tige 30.

Lorsque l'on se trouve dans le cas correspondant à la mise en oeuvre du deuxième mode de réalisation de l'invention, on saisit la fourrure 40 entre les rebords 44 de chacun des éléments 42,43 simultanément à leur accolement. Ensuite, on les réaligne comme indiqué précédemment, par glissement latéral.

La fixation de la tige 30 et de l'écrou 31 à la suspente constitue une deuxième étape de l'installation.

Plus précisément on dispose l'écrou 31 dans son logement constitué de deux fenêtres accolées 26. On introduit ensuite la tige 30 axialement dans les rigoles 25' accolées formant un logement cylindrique, la tige 30 se trouvant ainsi glissée entre les deux faces dorsales des éléments 23 et 24.

Lorsque la tige 30 rencontre l'écrou 31, on procède à leur alignement, et on visse ensuite l'écrou 31 de manière à faire progresser la tige 30 qui continue à s'insérer axialement, au-delà de l'écrou 31, dans la partie inférieure de son logement.

Lorsque le réglage en hauteur de la suspente est jugé satisfaisant, on amène deux créneaux de l'écrou à l'aplomb de l'échancrure 26', et, par simple gravité, la suspente descend de la hauteur de l'échancrure, en pratique négligeable. L'échancrure 26' constitue un moyen de blocage de l'écrou 31 dans une position de réglage définie.

De cette manière, la suspente 20 est fixée à la tige 30. En débloquant l'écrou 31, il devient possible de régler à nouveau la position de la suspente 20 par rapport à l'axe de la tige 30, ce qui définit, en pratique sa hauteur par rapport au support fixe non représenté dont la tige 30 est solidaire.

Dans le cas de la mise en oeuvre du premier mode de réalisation de l'invention, une fois fixé l'ensemble des suspentes 20, 20', et autres, destinées à soutenir les profilés, ou fourrures, servant d'armature au faux-plafond, on pose un profilé 10 en biais sur la partie horizontale de l'élément 23, par exemple, ou de l'élément 24, c'est-à-dire en prenant la branche la plus courte du L ainsi formé par chacun de ces éléments.

Puis, par un mouvement pivotant, on amène le rebord 11 du profilé 10 à s'insérer à l'intérieur du rebord 22 qui le bloque.

On remarquera que la suspente 20 permet de supporter des profilés de diverses formes, sous réserve que le rebord 11 soit de dimensions lui permettant de coopérer avec, c'est-à-dire, en pratique, de s'insérer sous, le rebord en L 22. Ainsi, un seul type de suspente permet de recevoir plusieurs types de profilés de dimensions et ou de formes différentes.

Bien entendu, comme mentionné précédemment, les suspentes dites simples sont constituées d'un élément en L 24 et d'une simple contreplaque sensiblement plane 23'.

On notera également que la tige filetée 30 et l'écrou correspondant 31 sont d'un type connu en soi, déjà couramment mis en oeuvre pour le soutien de suspentes, et, par construction, il est prévu que les suspentes selon l'invention soient compatibles, par leur dimension avec des tiges filetées 30 et des écrous 31 déjà installés.

La présente invention ne se limite pas aux modes de réalisation décrits à titre d'exemple, mais englobe toute variante qu'il appartiendra à l'homme de l'art d'envisager.

## Revendications

1) Suspente, notamment pour fourrures de faux plafond, du genre comportant une tige filetée solidaire d'un point d'ancrage, un écrou coopérant avec la tige filetée, et un organe de soutien dans lequel est ménagé un logement de forme sensiblement cylindrique apte à recevoir ladite tige filetée et une fenêtre apte à recevoir ledit écrou, caractérisée en ce que l'organe de soutien (20,41) est constitué de deux éléments (23,24 ; 42,43) formant plaque et contre-plaque accolés dos à dos et assemblés, de manière amovible, par la coopération de crevés (27) et de fenêtres (29) prévus dans lesdits éléments.

2) Suspente selon la revendication 1, caractérisée en ce qu'un élément (23,42) de l'organe de soutien comprend au moins un crevé (27) et au moins une fenêtre (29) destinés à coopérer respectivement avec une fenêtre (29) et un crevé (27) de l'autre élément (24,43).

3) Suspente selon la revendication 1 ou 2, caractérisée en ce que le logement de la tige (30) est constitué par deux rigoles hémi-cylindriques (25') ménagées respectivement dans les deux éléments (23,24 ; 42,43) et interrompues, chacune sur leur hauteur, par la fenêtre (26) recevant l'écrou (31).

4) Suspente selon la revendication 3, caractérisée en ce que la fenêtre (26) comporte un moyen de blocage (26') de l'écrou (31).

5) Suspente selon la revendication 4, caractérisée en ce que le moyen de blocage (26') est constitué par une échancrure.

6) Suspente selon l'une quelconque des revendications 1 à 5, caractérisée en ce que l'un au moins des éléments (23,24) de l'organe de soutien (20) présente, vers son extrémité opposée au point d'ancrage, au moins un rebord (22) pour assemblage, par emboîtement, avec un rebord (1) d'une fourrure (10) de faux plafond.

7) Suspente selon l'une quelconque des revendications 1 à 5, caractérisée en ce que les deux éléments (42,43) de l'organe de soutien (41) s'écartent l'un de l'autre, vers leurs extrémités opposées au point d'ancrage, et se terminent chacun par un rebord (44), ces rebords (44) formant un étrier pour supporter un rebord d'une fourrure (40) de faux plafond.

FIG.1

FIG.2

0223680

FIG.3

FIG.4

0223680

0223680

## FIG.5

## FIG.6